(19) Europäisches Patentamt

European Patent Office

Office européen des brevets

(11) Veröffentlichungsnummer: **0 315 047 B1**

# (12) EUROPÄISCHE PATENTSCHRIFT

(45) Veröffentlichungstag der Patentschrift:
05.06.91 Patentblatt 91/23

(51) Int. Cl.⁵: **B01J 35/04**

(21) Anmeldenummer: **88117891.7**

(22) Anmeldetag: **27.10.88**

(54) **Monolithischer Katalysatorkörper.**

(30) Priorität: **03.11.87 DE 3737248**

(43) Veröffentlichungstag der Anmeldung:
**10.05.89 Patentblatt 89/19**

(45) Bekanntmachung des Hinweises auf die
Patenterteilung:
**05.06.91 Patentblatt 91/23**

(84) Benannte Vertragsstaaten:
**BE DE FR GB NL SE**

(56) Entgegenhaltungen:
**EP-A- 0 121 445**
**EP-A- 0 151 229**

(73) Patentinhaber: **BASF Aktiengesellschaft**
**Carl-Bosch-Strasse 38**
**W-6700 Ludwigshafen (DE)**

(72) Erfinder: **Mross, Wolf-Dieter, Dr.**
**Anselm-Feuerbach-Strasse 21**
**W-6710 Frankenthal (DE)**
Erfinder: **Drews, Ronald, Dr.**
**Pranckstrasse 22**
**W-6700 Ludwigshafen (DE)**
Erfinder: **Scheidsteger, Olaf, Dr.**
**Rheindammstrasse 30**
**W-6800 Mannheim (DE)**
Erfinder: **Neth, Norbert, Dr.**
**Ostring 37**
**W-6712 Bobenheim-Roxheim 1 (DE)**

## Beschreibung

Vorliegende Erfindung betrifft Katalysatoren in Form von monolithischen Körpern, die von einer Vielzahl zueinander paralleler Kanäle, die voneinander durch Wandstege getrennt sind, durchsetzt sind.

Solche Katalysatoren, die auch als wabenförmige Katalysatoren bekannt geworden sind, werden vor allem dort eingesetzt, wo es auf einen geringen Druckabfall ankommt. Dieser geringe Druckabfall ist insbesondere wichtig für die Umsetzung von Stoffen die in geringen Anteilen vorliegen, beispielsweise bei der Umsetzung von in Abgasen enthaltenen Schadstoffen wie Stickoxiden, Kohlenmomoxid und unverbrannten Kohlenwasserstoffen. Solche Abgase stehen unter einem nur geringen Überdruck und es können daher bei der Behandlung solcher Gase keine Katalysatorschüttungen eingesetzt werden, da diese dem Gasdurchgang einen zu große Widerstand entgegensetzen. Insbesondere verbietet sich der Einsatz von Katalysatorschüttungen auch bei der Behandlung von staubhaltigen Gasen, da durch Staubablagerungen in der Schüttung die Gasdurchgänge mehr oder minder rasch blockiert werden und dem Gasdurchgang einen zunehmenden Widerstand entgegensetzen.

Für die Herstellung von Wabenkatalysatoren kann man entweder auf einen vorgefertigten wabenförmigen Träger aus Metall oder keramischem Material die katalytisch aktive Masse, z.B. durch Tränken oder Beschichten, aufbringen oder man stellt direkt Vollkatalysatoren her, d.h. Katalysatoren, die ausschließlich aus der katalytisch aktiven Masse bestehen.

Die Herstellung von Wabenträgern aus Keramik bzw. von Vollkatalysatoren erfolgt üblicherweise durch Extrudieren (vgl. Advanced Materials in Catalysis, Academic Press, 1977, Seiten 293 bis 322). Hierzu wird eine pulverförmige Mischung aus den keramischen Oxiden und/oder katalytisch aktiven Oxiden in Gegenwart von Plastifizierungsmitteln und Flüssigkeit durch Kneten zu einer plastischen Masse verarbeitet und diese durch Extrudieren in einen Wabenkörper übergeführt. Letzterer wird getrocknet, calciniert und falls nicht schon vorher geschehen, mit katalytisch aktiver Masse belegt.

Die so hergestellten Wabenkörper haben üblicherweise Längen von 0,1 bis 1,5 m und Querschnittsbreiten von 0,03 bis 1 m (im Falle von Wabenkörpern mit kreisförmigem Querschnitt : Durchmesser).

In der DE-AS-26 58 539 wird ein Verfahren zur selektiven Entfernung von Stickoxiden durch Reduktion mit Ammoniak in Gegenwart von wabenförmigen Katalysatoren beschrieben. Der hydraulische Durchmesser der Kanäle der wabenförmigen Katalysatoren soll 2,0 bis 30 mm, die offene Frontalfläche 50 bis 80%, und die Abgasgeschwindigkeit – in den Kanälen – 0,5 bis 60 m/sec betragen. Hierdurch soll ein Verstopfen der Katalysatordurchgänge durch Staubablagerungen verhindert werden, wobei gleichzeitig die mechanische Stabilität der Katalystorkörper den in der Praxis gestellten Anforderungen genügt.

In der DE-OS 34 42 929 und der hierzu im Zusatzverhältnis stehenden DE-OS 34 44 439 werden Katalysatoren vorgeschlagen, die in einem Gehäuse angeordnet sind, allseitig umströmt werden und in Strömungsrichtung Längs- sowie Querkanäle aufweisen. Durch diese Anordnung soll eine innige Kontaktierung sowie Reinigung erzielt werden. Wie diese Quer- und Längskanäle angeordnet sind und wie sie in Verbindung zueinander stehen, ist diesen Offenlegungsschriften jedoch nicht zu entnehmen.

Der vorliegenden Erfindung lag die Aufgabe zugrunde, monolithische Katalysatorkörper, die in Richtung ihrer Hauptachse mit einer Vielzahl zueinander paralleler, durch Wandstege voneinander getrennter Kanäle durchsetzt sind, bereitzustellen, die gegenüber bekanntem monolithischen Katalysatorkörpern bei sonst vergleichbaren Bedingungen eine erhöhte Umsetzung gewährleisten.

Es wurde gefunden, daß diese Aufgabe dadurch gelöst werden kann, daß die Wandstege Öffnungen aufweisen, durch die jeder Kanal mit zumindest einem benachbarten Kanal in Verbindung steht, mit der Maßgabe, daß die Entfernung E zweier benachbarter, die gleichen Kanäle verbindender Öffnungen voneinander der Bedingung

$$E = X \cdot D \text{ [cm]}$$

genügt, wobei D der hydraulische Durchmesser eines Kanals und X eine Zahl von 2 bis 50 bedeutet.

Der vorliegenden Erfindung liegt die überraschende Erkenntnis zugrunde, daß bei gegebenen Bedingungen die Wirksamkeit eines monolithischen, mit Kanälen durchsetzten Katalysators gesteigert werden kann, wenn die Kanäle nicht von der Einströmfläche bis zur Ausströmfläche mit durchgehenden Wandstegen voneinander getrennt sind, sondern daß in gewissen Abständen, die vom hydraulischen Durchmesser eines Kanals abhängen, Kommunikationsmöglichkeiten zwischen zumindest zwei benachbarten Kanälen gegeben sind, d.h., daß die Wandstege in gewissen Abständen Öffnungen aufweisen, durch die ein Gasaustausch zwischen den einzelnen Kanälen stattfinden kann.

Erfindungsgemäß werden die Öffnungen in einem Abstand von

$$E = X \cdot D$$

voneinander angebracht, wobei D der hydraulische Durchmesser eines Kanals und X eine Zahl von 2 bis 50 bedeutet. Der hydraulische Durchmesser D ist definiert als

$$D = \frac{\text{Querschnittsfläche des Kanals} \times 4}{\text{Länge der inneren Peripherie des Kanals}} \quad [cm] \quad .$$

üblicherweise beträgt der hydraulische Durchmesser eines Kanals von 0,1 bis 1,2 cm.

Die Öffnungen können im einfachsten Fall am fertigen Katalysatorkörper z.B. durch Stechen und Bohren angebracht werden. Der Katalysatorkörper wird dabei von einer seiner äußeren Begrenzungsflächen in Richtung auf die gegenüberliegende Begrenzungsfläche durchbohrt, wobei die Bohrungen so vorgenommen werden, daß jeder Kanal zumindest mit einem Nachbarkanal im Abstand $E = X \cdot D$ cm eine Verbindung erhält. Um die mechanische Stabilität des Katalysatorkörpers nicht unnötig zu beeinträchtigen, werden die Bohrungen so gelegt, daß man mit möglichst wenigen Bohrungen auskommt. Der Durchmesser HD der Öffnungen wird vorteilhaft so gewählt, daß er der Formel

$$HD = 0,1 \text{ bis } 0,9 \times D \text{ [cm]}$$

genügt, wobei D wiederum der hydraulische Durchmesser eines Kanals bedeutet.

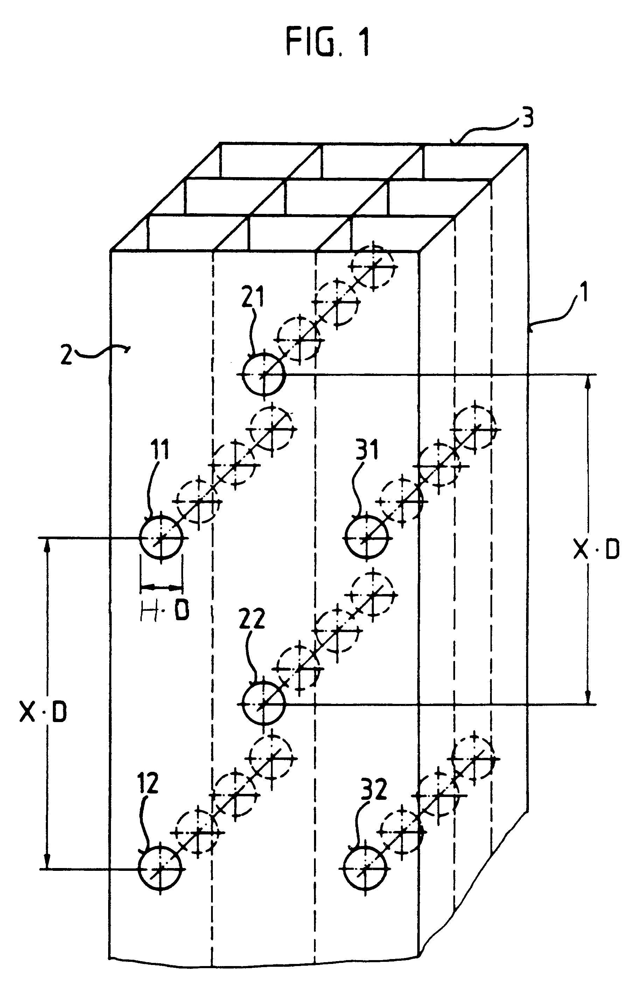

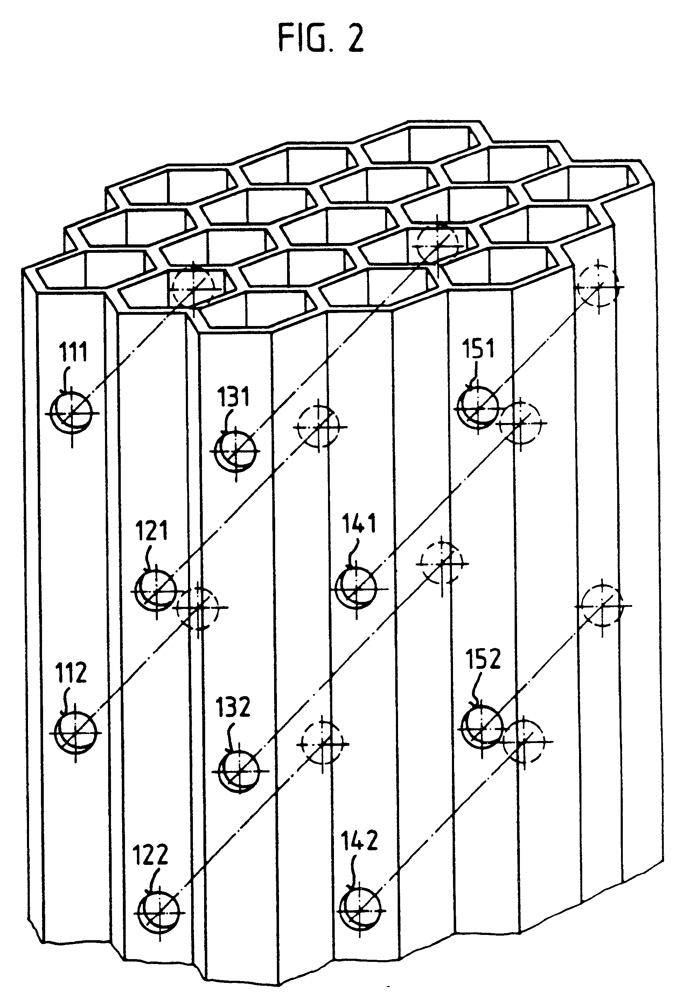

Die erfindungsgemäßen monolithischen Katalysatorträger seien an Hand der schematischen Figuren 1 und 2 beispielsweise näher erläutert.

In Figur 1 ist ein monolithischer Katalysatorkörper 1 mit 3 × 3 Wabenkanälen mit quadratischem Querschnitt dargestellt. Der Katalysatorkörper weist Durchbohrungen 11 und 12, 21 und 22 sowie 31 und 32 auf, die so gelegt sind, daß sie sich von der einen Mantelfläche 2 zur gegenüberliegenden Mantelfläche 3 erstrecken, so daß die in einer Reihe hintereinander liegenden Kanäle in gleicher Höhe durch Öffnungen in den Wandstegen miteinander in Verbindung stehen. Die Bohrungsgruppen 11 und 12, 21 und 22 sowie 31 und 32 liegen zweckmäßig nicht in einer Höhe, sondern sind, wie in der Figur veranschaulicht, versetzt zueinander, z.B. auf Lücke, angeordnet, um auf diese Weise die mechanische Stabilität des Katalysatorkörpers möglichst wenig zu beeinträchtigen. Die in Strömungsrichtung – von oben nach unten – gesehen jeweils erste Bohrung einer Gruppe liegt von der Eintrittsfläche her gesehen ebenfalls innerhalb eines Bereiches, der durch die Formel $E = X \cdot D$ gegeben ist.

In Figur 2 ist ein monolithischer Katalysatorkörper mit Durchgangskanälen mit der Querschnittfläche eines gleichseitigen Sechseckes dargestellt. Der Wabenkörper ist mit 5 Gruppen (111/112, 121/122, 131/132, 141/142 und 151/152) von Bohrungen versehen, die sich von der einen Begrenzungsfläche bis zur anderen Begrenzungsfläche erstrecken.

Beispiel

In jeweils 300 mm lange Wabenkörper aus Aluminiumoxid, die mit 3 × 3 Kanälen durchsetzt sind (hydraulischer Durchmesser eines Kanals 6 mm, Wandstärke der die Kanäle voneinander trennenden Stege 1,4 mm), werden, wie in Figur 1 veranschaulicht, Bohrungen angebracht. In einem solchen Wabenkörper 1 werden Bohrungen in einem Abstand von 30 mm zwischen den Bohrungen einer Rohrlochgruppe angebracht bei Bohrungsdurchmessern von 3 mm, wobei die erste Bohrung 11 bzw. 31 der Bohrlochgruppen 11 und 12 sowie 31 und 32 sich in einem Abstand von jeweils 10 mm von der Anströmfläche sowie die erste Bohrung 21 der Bohrlochgruppe 21 und 22 in einem Abstand von 25 mm von der Anströmfläche befinden.

Bei einem zweiten Wabenkörper C werden Bohrungen in einem Abstand von 15 mm zwischen den Bohrungen einer Bohrlochgruppe vorgesehen, wobei hier der Abstand der ersten Bohrlöcher 11 und 31 von der Anströmfläche ebenfalls 10 mm, derjenige des ersten Bohrloches 21 17,5 mm von der Anströmfläche beträgt.

Die Wabenkörper sind mit 10 Gew.% $V_2O_5$ – als katalytisch aktive Komponente beaufschlagt.

Die wabenförmigen Katalysatoren werden mit einem Gas beaufschlagt, das aus 200 Vol. ppm NO, 4 Vol.% Sauerstoff, 10 Vol.% Wasserdampf, Rest Stickstoff besteht. Diesem Gasstrom wird Ammoniak in einer solchen Menge zugesetzt, daß das Molverhältnis $NH_3 : NO$ gleich 1,2 ist.

In der folgenden Tabelle sind die Ergebnisse veranschaulicht, die mit einem monolithischen Katalysatorkörper erhalten worden sind der

A) keine Bohrungen,

B) Bohrungen im Abstand von 30 mm
(Durchmesser der Bohrungen 3 mm)
C) Bohrungen im Abstand von 15 mm
(Durchmesser der Bohrungen 3 mm) aufweist.

Tabelle

| | Katalysator | T (°C) | SV (h⁻¹) | η (%) | K(m/h) |
|---|---|---|---|---|---|
| A) | ohne Bohrungen | 380 | 21117 | 68,0 | 56,3 |
| | | 350 | 21303 | 64,7 | 49,9 |
| B) | Bohrungen im Abstand von 30 mm | 380 | 21385 | 69,6 | 59,6 |
| | | 350 | 21193 | 66,3 | 54,0 |
| C) | Bohrungen im Abstand von 15 mm | 380 | 21217 | 74,2 | 67,3 |
| | | 350 | 21217 | 70,9 | 61,3 |

In der obigen Tabelle bedeutet SV die Raumgeschwindigkeit [h⁻¹], η der gemessene $NO_x$-Umsatz, und K die Aktivität des Katalysators [m/h], die sich aus der folgenden Formel ergibt:

$$K = -SV \times \ln(1-\eta)$$

Aus der Tabelle ist zu ersehen, daß die Aktivität des monolithischen Katalysators je nach Zahl der Bohrungen um 10 bis 20% erhöht wird gegenüber einem monolithischen Vergleichskatalysator ohne Bohrungen.

## Ansprüche

1. Monolithischer Katalysatorkörper, der in Richtung seiner Hauptachse mit einer Vielzahl zueinander paralleler, durch Wandstege voneinander getrennter Kanäle durchsetzt ist, dadurch gekennzeichnet, daß die Wandstege Öffnungen aufweisen, durch die jeder Kanal mit zumindest einem benachbarten Kanal in Verbindung steht, mit der Maßgabe, daß die Entfernung E zweier benachbarter, die gleichen Kanäle verbindender Öffnungen voneinander der Bedingung

$$E = X \cdot D \ [cm]$$

genügt, wobei D der hydraulische Durchmesser eines Kanals und X eine Zahl von 2 bis 50 bedeutet.

2. Monolithischer Katalysatorkörper nach Anspruch 1, dadurch gekennzeichnet, daß die Öffnungen einen Durchmesser HD von

$$HD = 0,1 \ bis \ 0,9 \times D \ [cm]$$

aufweisen.

## Claims

1. A monolithic catalyst structure with a multiplicity of channels in the direction of its main axis which are in a parallel arrangement and separated from one another by webs, said webs having openings through which each channel communicates with at least one adjacent channel, with the proviso that the distance E between two adjacent openings connecting the same channels satisfies the condition

$$E = X \cdot D \text{ [cm]},$$

where D is the hydraulic diameter of a channel and X is from 2 to 50.

2. A monolithic catalyst structure as claimed in claim 1, wherein the openings have a diameter HD of

$$HD = \text{from } 0.1 \text{ to } 0.9 \times D \text{ [cm]}.$$

## Revendications

1. Corps de catalyseur monolithique, qui est traversé, dans la direction de son axe principal, par une pluralité de canaux parallèles entre eux, séparés les uns des autres par des nervures, caractérisé en ce que les nervures présentent des ouvertures, par lesquelles chaque canal communique avec au moins un canal voisin, avec cette condition que l'écartement E entre elles de deux ouvertures voisines mettant en communication ces canaux satisfasse à la relation

$$E = X \cdot D \text{ [cm]}$$

D étant le diamètre hydraulique d'un canal et X un nombre de 2 à 50.

2. Corps de catalyseur monolithique suivant la revendication 1, caractérisé en ce que les ouvertures présentent un diamètre HD de

$$HD = 0,1 \text{ à } 0,9 \times D \text{ [cm]}.$$

# FIG. 1

# FIG. 2